# EUROPEAN PATENT SPECIFICATION

(11) **EP 2 812 933 B1**
(45) Date of publication and mention of the grant of the patent: **18.05.2016**
(21) Application number: 12703102.9
(22) Date of filing: 07.02.2012
(51) Int. Cl.: H01M 2/02, H01M 4/14

(54) **PROTECTION FOR A POSITIVE FLAT ELECTRODE OF A LEAD ACID BATTERY, POSITIVE FLAT ELECTRODE AND BATTERY EQUIPPED THEREOF, PROCESS FOR MANUFACTURING.**
SCHUTZ FÜR EINE POSITIVE FLACHELEKTRODE FÜR EINEN BLEIAKKUMULATOR, POSITIVE FLACHELEKTRODE UND BATTERIE DAMIT, VERFAHREN ZUR HERSTELLUNG
PROTECTION POUR UNE ÉLECTRODE PLATE POSITIVE D'UNE BATTERIE PLOMB-ACIDE, ÉLECTRODE PLATE POSITIVE ET BATTERIE EN ÉTANT MUNIES, PROCÉDÉ DE FABRICATION

(43) Date of publication of application: 17.12.2014
(73) Proprietor: Amer-Sil S.A., 8281 Kehlen (LU)
(72) Inventor: LAMBERT, Urbain, L-8323 Capellen (LU); DAUWE, Guy, L-8146 Bridel (LU)
(74) Representative: Gevers & Orès
(86) International application number: PCT/EP2012/052042
(87) International publication number: WO 2013/117218

(56) References cited:
- EP-A1- 0 753 895
- EP-A1- 2 413 398
- US-A- 5 384 211

## Description

### Technical field

The present invention generally relates to a protection for a positive flat electrode of a lead acid battery and a positive flat electrode and a battery equipped thereof. It also relates to a process for manufacturing such positive flat electrode.

### Background Art

Lead acid batteries are widely used and include adjacent positive and negative plate electrodes immersed in an electrolyte and spaced by separators. The latter are used to prevent short circuits occurring between the electrodes while enabling ions exchange and electrolyte flow.

The lead acid battery is charged and discharged alternatively. This operation provokes the electro-chemical transformation of an active mass made of lead dioxide into lead sulphate on the positive plate electrodes and lead into lead sulphate on the negative plate electrodes during discharge and vice versa during charge. During this reaction, the active mass contracts or expands. This phenomenon is called breathing.

The positive plate electrodes can either be flat or tubular. Tubular electrodes comprise pencils made of current carrying spines surrounded by the active mass. Flat electrodes comprise a grid and active mass located in cells defined by the grid. In both cases, breathing could lead to active mass shedding which has a major impact on the life time of the battery. As a result, the electrodes are often protected to avoid such shedding phenomenon. The electrochemical reactions between the electrodes and the electrolyte should however be preserved.

In tubular electrodes, the electrode protection is obtained thanks to a cartridge-type belt gauntlet. The active mass is encased between the current carrying spines and the small pockets defined by said cartridge-type belt gauntlet.

During the tubular electrodes manufacturing process, the material which is to constitute the active mass is introduced between the carrying spines and the cartridge type belt gauntlet and subjected to acid treatments and formation process. In other words, said cartridge type belt gauntlet is used as a mould to give its shape to the active mass. It is a further function given to the cartridge type belt gauntlet and many materials have been proposed, including thermo shrinkable material, which more or less fit the specific tubular electrodes needs.

As far as the flat electrode manufacturing process is concerned, the shape of the active mass is defined by the grid and there is no need to further encase the material but there is still a need for a protection against the shedding of the active mass.

Several ways to achieve this have been described in the prior art and have been used with more or less success.

Typically, a layer of glass fiber mat is first vertically wrapped around the electrode and is then clamped in place using a cap or boot. In further steps, a glass mat and a PVC perforated thin layer are positioned above the glass fiber mat and horizontally wrapped around the electrode and its ends are sealed together. In an additional step, the wrapped positive electrode, a polyethylene separator cut to size and a negative electrode are alternatively positioned and stacked to form an electrode stacking for use in a battery.

These prior art methods are labor intensive and time consuming, employing partially manual procedures, or require complex and expensive equipment to automate the numerous cutting, folding, wrapping, assembling and sealing steps.

It is further known from document FR 2 470 448 a socket for a positive flat electrode. It is said to be made of a thermo shrinkable material. The socket is supposed to fit the electrode thanks to a heating treatment. While promising, these sockets have never been industrially applied yet.

It is also known to introduce positive flat electrode in sleeve or pockets, for instance from documents US 5 384 211, US 5 616 434, US 4 080 727 or US 4 407 063. Such sleeve or pockets are said to be separators. In other words, they are to be used instead of the single leaf separators classically used between the positive and the negative electrodes and they are accordingly configured. As a result, they are not appropriate, especially from a permeability point of view.

### Technical problem

It is an object of the present invention to provide a positive flat electrode protection which is both reliable and easy to produce.

### General description of the Invention

In order to reach the above-mentioned goal, the present invention proposes a protection for a positive flat electrode of a lead acid battery, said protection comprising two flat faces made of a shrinkable material, especially a thermo shrinkable material, said flat faces having two lateral sides, a lower side and an upper side, said flat faces being joined together along said lateral sides according to a first kind of assembly, said protection being open between said upper sides, said protection being further open between said lower sides or being closed along said lower sides by a join assembling said flat faces according to another kind of assembly.

By another kind of assembly, we especially mean a technique providing a different joining strength. By open, we especially mean open along the whole length of said lower sides but the invention also encompasses protection being partially opened.

Until now it was believed to be impossible to industrially use shrinkable sleeve or pocket type in the case of positive flat electrodes.

The present invention solves this problem by proposing a protection in which the lower side of the protection is open or joined a different way than its lateral sides. Such features have enabled shrinkage of the sleeve or pocket which has provided surprisingly good results, especially as regards battery lifetime and capacity.

According to different aspects of the invention which can be taken alone or in combination:
- said lateral sides are joined trough weaving or sewing;
- said lateral sides are joined through sewing according to a first kind of stitches;
- said protection are open or closed along said lower sides by sealing;
- said protection are open or closed along said lower sides by sewing according to another kind of stitches;
- said first kind of stitches are double lockstitches and said another kind of stitches are serger stitches;
- said flat faces are configured to have a first ability to shrink along said lateral sides and another ability to shrink in a direction perpendicular to said lateral sides;
- said protection is reinforced along said lateral sides.

According to a first embodiment of the invention, said protection comprises two non woven sheets of said shrinkable material, said two sheets being assembled together to correspondingly define said flat faces when being joined together along said lateral sides through sewing.

According to different aspects of said first embodiment which can be taken alone or in combination:
- said sheets are assembled together by ultrasonic welding along said lower sides;
- said protection comprises an isolation resin along said lateral sides;
- said shrinkable material is made of polyester, polypropylene or a mixture thereof.

Any kind of non woven fabric can be used. It can be a mechanically bonded fabric as a needled or hydro entangled or calendared fabric, for instance a flat thermo-bonded or point-bonded fabric. It can also be a chemically bonded fabric. From another perspective it can be a fabric using spunbond or meltblown or staple fibers.

According to a second embodiment of the invention said protection comprises a woven sheet of said shrinkable material, said woven sheet forming a sleeve defining said flat faces when being joined together along said lateral sides through weaving.

According to different aspects of said second embodiment which can be taken alone or in combination:
- said sleeve is assembled by ultrasonic welding along said lower sides;
- said sleeve has a higher weaving density along said lateral sides;
- said shrinkable material is made of polyester yarn, polypropylene yarn or a polyester/polypropylene mixture yarn;
- the yarn for the weft is a thermo shrinkable yarn;
- the yarn for the weft is perpendicular to said lateral sides.

Additionally, the invention also concerns a positive flat electrode and a lead acid battery of the flat electrode type comprising a protection as described above. In said positive flat electrode, said protection can be partially closed along said upper sides.

According to a further aspect of the invention there is provided a process for manufacturing a positive flat electrode for use in a lead acid battery, comprising the steps of
- supplying a protection for said positive flat electrode, said protection comprising two flat faces made of a shrinkable material, said flat faces having two lateral sides, a lower side and an upper side, said flat faces being joined together along said lateral sides according to a first kind of assembly, said protection being open between said upper sides, said protection being further open between said lower sides or being closed along said lower sides by a join assembling said flat faces according to another kind of assembly,
- placing an electrode plate into said protection,
- shrinking the protection.

The invention is further described in the accompanying drawings and the description below. Other features, objects and advantages of the invention will be apparent from the description, the drawing and the claims.

### Description of drawings

Fig. 1 is a perspective view schematically showing a positive flat electrode according to a first embodiment of the invention.
Fig. 2 is a face view schematically showing a positive flat electrode according to a second embodiment of the invention.
Fig. 3 is a face view schematically showing the protection of fig. 2.
Fig. 4 is a face view schematically showing another embodiment of a protection according to the invention.

### Detailed description

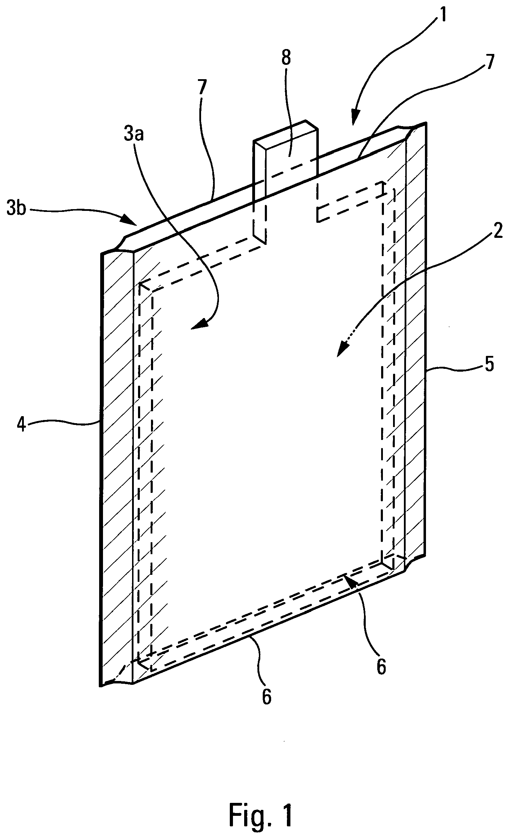

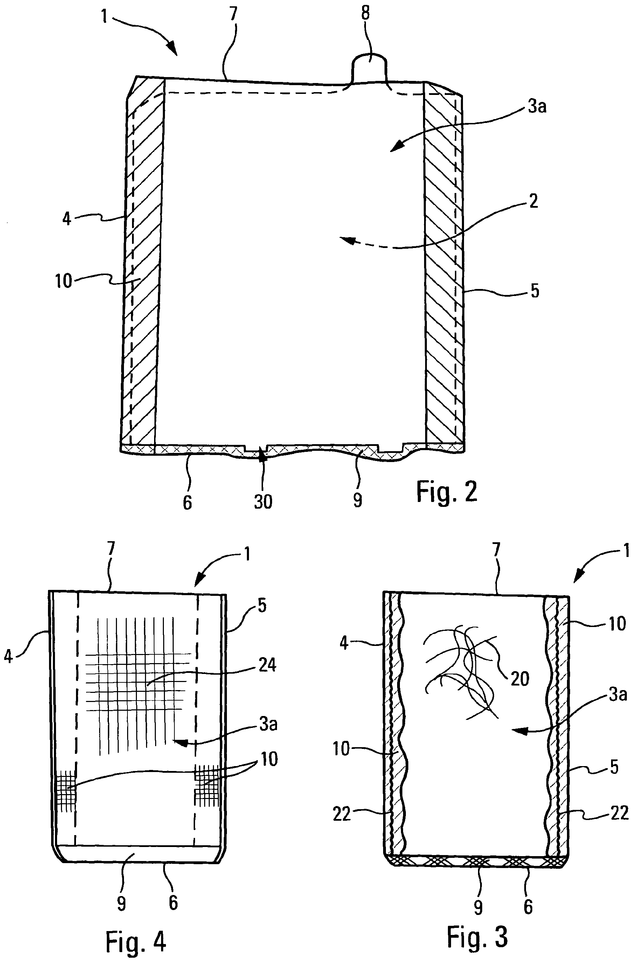

As illustrated, the invention is related to a protection 1 for a positive flat electrode of a lead acid battery. Even if not detailed, the positive flat electrode comprises a grid or plate 2 filled with active mass, said grid 2 being shown in position on Fig. 1 and 2, mainly in doted lines.

Said protection 1 comprises two flat faces 3a, 3b which can be simultaneously seen only on Fig. 1. They are made of a shrinkable material. The basic material of said flat faces 3a, 3b is, for instance, a fabric which can comprise polyester or polypropylene or mixtures thereof.

The fabric can be impregnated by a protective resin aiming at creating a protective film enhancing the resistance of said fabric against oxidation. Said protective resin can be an aqueous or solvent dispersion of a thermoplastic or thermoset polymer or copolymer.

The protective resin can also be made of latex. It can be a fabric using core-shell latex, multiphase latex or latex in stable dispersion.

The quantity of protective resin applied is in the range of 5 to 40 % weight, preferably 13 to 30 % weight. The sheet is dried in an oven down to a moisture content less than 1 % weight while avoiding shrinkage. The sheet is wound on rolls.

Said protective resin is chosen, for instance, among the group consisting of: acrylic resins like e.g. methyl methacrylate resins or butyl acrylate/methyl acrylate copolymer resins, styrene-butadiene resins, phenolic resins or mixtures thereof.

When a thermoplastic resin is used, said protective film can be obtained by coating, especially by liquid or by powder coating.

The fabric and the protective film can be a cross¨-linked system as a three dimensional network.

Said flat faces 3a, 3b show a permeability distinguishing them from the separator. As an example, their greater pore size is over 10 µm, more precisely over 50 µm.

Said flat faces have two lateral sides 4, 5, a lower side 6 and an upper side 7.

The protection is open between the upper sides 7 of said flat faces 3a, 3b, at least before insertion of the electrode plate 2.

As illustrated on Fig. 1, the protection 1 can remain open after insertion of the electrode plate 2. In other words, the upper sides 7 of said flat faces 3a, 3b can remain distant. In another embodiment, the protection is partially closed along said upper sides and defines an aperture for a connector 8 of the electrode plate 2.

Said flat faces 3a, 3b are joined together along said lateral sides 4, 5 according to a first kind of assembly.

According to a first aspect of the invention, corresponding to the solution shown on Fig. 1, said protection is open between said lower sides 6 which mean that said lower sides 6 are distant from each other. In other words, the protection here defines a sleeve.

According to another aspect of the invention, corresponding to the solution shown on Fig. 2, said protection is closed along said lower side 6 by a join 9 assembling said flat faces 3 according to another kind of assembly. In other words, the protection here defines a pocket.

As a first example, said lateral sides 4, 5 are joined through weaving or sewing while the lower sides 6 are joined by sealing. By sealing, we for instance mean welding, gluing, thermo fusing and/or any equivalent sealing techniques. As another example, said lateral sides 4, 5 are joined through sewing according to a first kind of stitches while said lower sides 6 are joined by sewing according to another kind of stitches. Said first kind of stitches can be double lockstitches and said another kind of stitches can be serger stitches.

From a general perspective, it is to be understood that while the lateral sides 4, 5 of both flat faces 3a, 3b are respectively assembled in a first way, the lower sides 6 thereof remain at least partially separated or unassembled or are assembled in a different way. It was found by the applicant that such solution provides a protection showing interesting results after shrinkage on the electrode plate.

The protection has the following advantages:
- It is breathable, i.e. the pocket expands and contracts with the change in volume of the active mass during the charge and discharge of the battery.
- It exerts a certain compression on the active mass.
- It has a tenacity to withstand the forces exerted by the active mass.
- It has a low electrical resistance.
- It is porous to allow an easy ion exchange.

Said flat faces 3a, 3b can be configured to have a first ability to shrink along said lateral sides 4, 5 and another ability to shrink in a direction perpendicular to said lateral sides 4, 5. More precisely, their ability to shrink along the direction perpendicular to said lateral sides 4, 5 can be greater than their ability to shrink along their lateral sides 4, 5. As an example their ability to shrink along the direction perpendicular to said lateral sides 4, 5 is between 4 to 10% and/or their ability to shrink along said lateral sides 4, 5 is below 2%. The fabric has thus an advantageous ability to shrink around the electrode plate 2 in order to keep the active mass in good contact with the grid.

The width of the pocket corresponds to the width of the plate plus between 1 and 3.5 times the thickness of the electrode plate 2, preferably between 1.05 and 2.6 times and most preferably between 1.08 and 2.2 times the thickness of the plate. The pocket is shrunk by applying heat, preferably by passing in front of an Infrared source during less than 20 seconds or by heating in an oven from 160°C to 250°C during between 20 seconds and 10 minutes.

On Fig. 2, the electrode plate 2 is provided with feet 30 inserted in the join 9.

As will be detailed below, the protection can be reinforced along said lateral sides 4, 5, for instance over a width inferior to 20 mm. Such feature aims at avoiding short circuits in the battery between adjacent electrodes.

As illustrated on Fig. 3, said protection comprises two non woven sheets of said shrinkable material, partially and schematically illustrated 20, said two sheets being assembled together to correspondingly define said flat faces 3a, 3b when being joined together along said lateral sides 4, 5 through sewing.

To obtain such non-woven sheets, extruded polyester filaments are laid down on a belt and then calendared.

The fabric is preferably made of flat calendared polyester spunbond material. Such fabrics are sold e.g. by Freudenberg under the trade name Terbond™, by JohnsManville under the trade name Duraspun™ or under the name Mopet by Mogul.

As already mentioned, the non-woven fabric can be impregnated with said protective resin. The fabric can be impregnated thereof between the calendaring step and a winding step, and/or the impregnation can be made of line.

To obtain the sleeves or pockets, two layers of fabric as described above are sewn together along a line 22 at a certain distance on the outmosts. This distance is given by the width and the thickness of the battery plate which has to be protected and an additional space to allow an easy insertion of the electrode plate while ensuring envelopment of the electrode after shrinkage.

Said sheets are here assembled together by ultrasonic welding along said lower sides 6 to form said join 9.

Said protection can further comprise an isolation resin along said lateral sides 4, 5 which can be realized preferably by the application of hot melt, but any other mean allowing closing the pores on the lateral sides can be used. A band 10 of said isolation resin can have a width from 1 to 4 mm.

As illustrated on Fig. 4, said protection can comprise a woven sheet of said shrinkable material, partially and schematically indicated 24, said woven sheet forming a sleeve defining said flat faces when being joined together along said lateral sides 4, 5 through weaving.

According to a preferred embodiment the woven sheet is made of polyester yarn, polypropylene yarn or a polyester/polypropylene mixture yarn.

The yarns for warp and weft have different properties; the most important difference that the yarn for the weft is a thermoshrinkable yarn from for example Diolen sold under the reference HT57Z130. The yarn for the weft is, for instance, perpendicular to said lateral sides.

For the warp direction, the yarn can consist of polyester or polypropylene or mixtures thereof in the range of 250 - 700 dtex, preferably of polyester of 400 - 550 dtex. This yarn is sold for example by Yamatex under the reference NE 24/2.

The difference in yarns allows the pocket to shrink in the transverse direction to maintain the active mass while in longitudinal direction the shrinkage is minimal. This is obtained by the thermoshrinkability of the above-mentioned yarn from Diolen.

For the weft direction, the thermoshrinkable yarn consists of polyester or polypropylene or mixtures thereof in the range of 300 - 800 dtex, preferably of polyester of 500 - 600 dtex.

For the warp direction, the number of yarns should be in the range of 140 - 225 per 100 mm, preferably between 165 - 205 per 100 mm. On both outmosts of the pocket, the number of yarns should be increased to 250 - 500, preferably from 350 - 410 per 100 mm and this on a width of 5 - 30 mm, preferably from 7 - 20 mm in case of one single pocket is woven in width. In other words, said sleeve can have a higher weaving density in a band 10 along said lateral sides 4, 5. Said band can have a width from 15 to 25 mm.

For the weft direction, the number of yarns should be in the range of 80 - 230 per 100 mm, preferably between 130 - 180 per 100 mm.

The sheet coming out of the weaving machine is preferably impregnated with the protective resin either on line or off line in a subsequent process step.

Said sleeve is here assembled by ultrasonic welding along said lower sides 6.

Some properties of the protection according to the invention are given below.

### Elasticity

The prior art solution has only a very low elasticity because the materials are just wrapped around the electrode plate. The proposed solution gives elasticity to the protection. This means that during the expansion of the active mass, the pocket follows the increase in volume while it exerts compression forces on the contraction. The contact between active mass and grid is maintained. The shedding i.e. the loss of active mass is considerably reduced and the capacity and the lifetime of the battery are thus considerably increased. An increase in the lifetime of about 15 % and an increase in the capacity of about 5 % can be expected.

### Containment

The tightness of the shrunken polyester pocket is shown by a test in which the force is measured to pull off the protection from a plate.

### Test procedure:

A wooden plate simulating an electrode plate of 10 cm in width and 8 cm in length and a thickness of 6 mm is placed inside a polyester pocket having a width of 11.5 cm for pockets made of woven sheets and 10.8 cm for pockets made of non-woven sheets. The length for both is 8 cm. The whole is placed in an oven at 180 °C during 10 minutes.

It is cooled down and placed in between clamps of a tensometer. The clamps move apart and the force at which the protection starts to slip is measured.

**Table 2: Containment**

| Prior art solution | 0 Newton as no constraint |
|---|---|
| Woven (according to the invention) | 400 - 500 Newton |
| Non-woven (according to the invention) | 400 - 500 Newton |

The shrunken polyester pocket thus fits very tightly around the electrode plate and is able to maintain the active material in tight contact with the grid. As a consequence, the active mass pack-density and thus the performance of the battery are increased.

### Tenacity

The polyester mat used for the manufacturing of the shrinkable pocket have a high tenacity as they withstand the volume changes of the active mass and do not burst.

**Table 3: Tensile strength**

| | |
|---|---|
| Woven (according to the invention) | 1200N/5cm |
| Non-woven (according to the invention) | 350N/5cm |

### Simplified process

The pocket is easy to process. Instead of 3 different materials, which each require an additional step in the process, the pocket or sleeve is used alone and improves the retention of the active mass.

As the shrinkable material used to provide said protection forms a sleeve or pocket after assembly of the lateral sides 4, 5 of the protection, the fabric is cut according to the length requested by the customer and adapted to the length of the plate. It is then assembled along its lower sides 6 or let open. The latter stage can be handled either just after having cut the sleeve, which is to say by the protection manufacturer, or just before assembling the battery, which is to say by the battery manufacturer.

The electrode plate is inserted by hand or by an automated process in the protection. Said protection can be supplied individually. It can also be supplied in rolls and unwound before insertion of the electrode plate.

The plate and the protection pass in front of infrared heaters or are heated by other means to the fabric shrinkage temperature range, typically around 180 °C to allow the fabric to shrink. After shrinkage the electrode plate is well insulated and ready for use. The plate and the protection can also be inserted in a boot, especially in case of protections made of sleeve.

In other words, the invention is also related to a process for manufacturing a positive flat electrode for use in a lead acid battery, comprising the steps of:
- supplying a protection for said positive flat electrode, said protection comprising two flat faces made of a shrinkable material, said flat faces having two lateral sides, a lower side and an upper side, said flat faces being joined together along said lateral sides according to a first kind of assembly, said protection being open between said upper sides, said protection being further open between said lower sides or being closed along said lower sides by a join assembling said flat faces according to another kind of assembly,
- placing an electrode plate into said protection,
- shrinking the protection.

The battery manufacturing process can further comprise the following steps:
- laying a separator onto said pocket,
- placing a negative plate electrode onto said pocket containing the electrode plate and the separator.

This process allows the manufacturing of electrode stackings with alternate positive and negative plate electrodes ready for insertion in a battery box or container, while necessitating a reduced number of discrete operating steps. The enveloping of the electrode with the sleeve/pocket material can actually be achieved in a single step, which essentially consists in introducing the electrode plate into a shrinkable sleeve/pocket and shrinking the pocket by exposing it to an Infrared light during less than 10 seconds.

It also greatly facilitates the implementation of the process in a fully automated continuous system and, as a consequence, the reliability of the manufacturing process and its operational availability.

Hence, the present process is particularly advantageous for the battery manufacturer as high quality batteries may be obtained without complicated and expensive machinery.

The invention is also related to a lead acid battery of the flat electrode type comprising a protection as described above.

## Claims

1. Protection against shedding of an active mass of a positive flat electrode of a lead acid battery, the active mass contracting and expanding during the charge and discharge of the lead acid battery, said protection comprising two flat faces made of a shrinkable material and having a pore size over 10µm, said flat faces having two lateral sides, a lower side and an upper side, said flat faces being joined together along said lateral sides according to a first kind of assembly, said protection being open between said upper sides, said protection being further open between said lower sides or being closed along said lower sides by a join assembling said flat faces according to another kind of assembly providing a different joining strength, the shrunken protection having elasticity properties so as to expand and contract with the change in volume of the active mass during the charge and discharge of the battery while exerting a compression on the active mass.

2. Protection according to claim 1 wherein said lateral sides are joined trough weaving or sewing.

3. Protection according to claim 1 or 2 wherein said lateral sides are joined through sewing according to a first kind of stitches.

4. Protection according to any of claims 1 to 3, said protection being open or closed along said lower sides by sealing.

5. Protection according to claim 3, said protection being open or closed along said lower sides by sewing according to another kind of stitches.

6. Protection according to claim 5 wherein said first kind of stitches are double lockstitches and said another kind of stitches are serger stitches.

7. Protection according to any one of claims 1 to 6 wherein said flat faces are configured to have a first ability to shrink along said lateral sides and another ability to shrink in a direction perpendicular to said lateral sides.

8. Protection according to any one of claims 1 to 7 said protection being reinforced along said lateral sides.

9. Protection according to any one of claims 1 to 8 comprising two non woven sheets of said shrinkable material, said two sheets being assembled together to correspondingly define said flat faces when being joined together along said lateral sides through sewing.

10. Protection according to claim 9 wherein said sheets are assembled together by ultrasonic welding along said lower sides.

11. Protection according to any one of claims 9 or 10 comprising an isolation resin along said lateral sides.

12. Protection according to any one of claims 9 to 11 wherein said shrinkable material is made of polyester, polypropylene or a mixture of thereof.

13. Protection according to any one of claims 1 to 8 comprising a woven sheet of said shrinkable material, said woven sheet forming a sleeve defining said flat faces when being joined together along said lateral sides through weaving.

14. Protection according to claim 13 wherein said sleeve is assembled by ultrasonic welding along said lower sides.

15. Protection according to any of claim 13 or 14 wherein said sleeve have a higher weaving density along said lateral sides.

16. Protection according to any of claim 13 to 15 wherein said shrinkable material is made of polyester yarn, polypropylene yarn or a polyester/polypropylene mixture yarn.

17. Protection according to claim 16 wherein the yarn for the weft is a thermo shrinkable yarn.

18. Protection according to claim 17 wherein the yarn for the weft is perpendicular to said lateral sides.

19. Positive flat electrode comprising a protection according to any preceding claims.

20. Positive flat electrode according to claim 19 wherein said protection is partially closed along said upper sides.

21. Lead acid battery of the flat electrode type comprising positive flat electrodes according to claim 19 or 20.

22. Process for manufacturing a positive flat electrode for use in a lead acid battery, comprising the steps of
- supplying a protection for said positive flat electrode, said protection comprising two flat faces made of a shrinkable material having a pore size over 10µm, said flat faces having two lateral sides, a lower side and an upper side, said flat faces being joined together along said lateral sides according to a first kind of assembly, said protection being open between said upper sides, said protection being further open between said lower sides or being closed along said lower sides by a join assembling said flat faces according to another kind of assembly providing a different joining strength, said protection having elasticity properties.;
- placing an electrode plate into said protection,
- shrinking the protection.

## Patentansprüche

1. Schutz gegen das Ablösen einer aktiven Masse einer positiven Flächenelektrode einer Bleibatterie, in der sich die aktive Masse während dem Laden und Entladen der Bleibatterie zusammenzieht oder ausdehnt, wobei besagter Schutz zwei flache Flächen aus einem schrumpfenden Material mit einer Porengröße von mehr als 10 µm umfasst, wobei die besagten flachen Flächen zwei laterale Seiten, nämlich eine untere und eine obere Seite, besitzen, wobei besagte flache Flächen längs der besagten lateralen Seiten gemäß einer ersten Art Montage verbunden werden, wobei besagter Schutz zwischen den besagten oberen Seiten offen und zwischen den besagten unteren Seiten weiter offen ist, oder längs der besagten unteren Seiten durch eine Verbindung verschlossen ist, die besagte flachen Flächen gemäß einer anderen Art der Montage verbindet, wobei die andere Art der Montage eine unterschiedliche Verbindungsstärke bereitstellt, und wobei der Schrumpfschutz elastische Eigenschaften aufweist, um sich mit der Volumenänderung der aktiven Masse während dem Laden und Entladen der Batterie zusammenzuziehen oder auszudehnen, während er auf die aktive Masse eine Kompression ausübt.

2. Schutz gemäß Anspruch 1, **dadurch gekennzeichnet, dass** die besagten lateralen Seiten durch Weben oder Nähen verbunden werden.

3. Schutz gemäß Anspruch 1 oder 2, **dadurch gekennzeichnet, dass** die besagten lateralen Seiten durch Nähen gemäß einer ersten Art von Stichen verbunden werden.

4. Schutz gemäß einem der Ansprüche 1 bis 3, **dadurch gekennzeichnet, dass** besagter Schutz längs der unteren Seiten durch Versiegelung offen oder verschlossen ist.

5. Schutz gemäß Anspruch 3, **dadurch gekennzeichnet, dass** besagter Schutz längs der unteren Seiten durch Nähen gemäß einer anderen Art von Stichen offen oder verschlossen ist.

6. Schutz gemäß Anspruch 5, **dadurch gekennzeichnet, dass** die besagte erste Stichart ein doppelter Doppelsteppstich und die besagte zweite Stichart ein Overlock-Stich ist.

7. Schutz gemäß einem der Ansprüche 1 bis 6, **dadurch gekennzeichnet, dass** die besagten flachen Flächen so konfiguriert sind, dass sie geeignet sind, zum einen längs der besagten lateralen Seiten zu schrumpfen, und zum anderen senkrecht zu den besagten lateralen Seiten zu schrumpfen.

8. Schutz gemäß einem der Ansprüche 1 bis 7, **dadurch gekennzeichnet, dass** der besagte Schutz entlang der besagten lateralen Seiten verstärkt ist.

9. Schutz gemäß einem der Ansprüche 1 bis 8, **dadurch gekennzeichnet, dass** er zwei Vliesstoff-[Stücke] aus besagtem Schrumpfmaterial umfasst, wobei besagte zwei Vliesstoffe miteinander verbunden werden, um entsprechend die besagten flachen Flächen zu bilden, wenn sie entlang der besagten lateralen Seiten durch Nähen verbunden werden.

10. Schutz gemäß Anspruch 9, **dadurch gekennzeichnet, dass** besagte Stoffe durch Ultraschallschweißen entlang der besagten unteren Seiten verbunden werden.

11. Schutz gemäß einem der Ansprüche 9 oder 10, **dadurch gekennzeichnet, dass** er entlang der besagten unteren Seiten ein Isolierharz umfasst.

12. Schutz gemäß einem der Ansprüche 9 bis 11, **dadurch gekennzeichnet, dass** besagtes Schrumpfmaterial aus Polyester, Polypropylen oder einer Mischung daraus besteht.

13. Schutz gemäß einem der Ansprüche 1 bis 8, **dadurch gekennzeichnet, dass** er einen gewebten Stoff aus besagtem Schrumpfmaterial umfasst, wobei der Stoff eine Manschette bildet, welche die besagten flachen Flächen definiert, wenn sie längs der lateralen Seiten durch Weben miteinander verbunden werden.

14. Schutz gemäß Anspruch 13, **dadurch gekennzeichnet, dass** die Manschette durch Ultraschallschweißen entlang der besagten unteren Seiten montiert wird.

15. Schutz gemäß einem der Ansprüche 13 oder 14, **dadurch gekennzeichnet, dass** die Manschette entlang der besagten unteren Seiten eine höhere Webdichte aufweist.

16. Schutz gemäß einem der Ansprüche 13 oder 15, **dadurch gekennzeichnet, dass** besagtes Schrumpfmaterial aus Polyestergarn, Polypropylengarn oder einem Mischgarn aus Polyester und Polypropylen besteht.

17. Schutz gemäß Anspruch 16, **dadurch gekennzeichnet, dass** das Garn des Schussfadens ein Thermoschrumpfgarn ist.

18. Schutz gemäß Anspruch 17, **dadurch gekennzeichnet, dass** das Garn des Schussfadens senkrecht zu den besagten lateralen Seiten angeordnet ist.

19. Positive Flächenelektrode, die einen Schutz gemäß einem der vorstehenden Ansprüche umfasst.

20. Positive Flächenelektrode gemäß Anspruch 19, **dadurch gekennzeichnet, dass** besagter Schutz entlang der besagten oberen Seiten teilweise verschlossen ist.

21. Bleibatterie vom Typ Flächenelektrode, die positive Flächenelektroden gemäß Anspruch 19 oder 20 umfasst.

22. Verfahren zur Herstellung einer positiven Flächenelektrode zur Verwendung in einer Bleibatterie, das folgende Schritte umfasst:
- Bereitstellung eines Schutzes für besagte positive Flächenelektrode, wobei besagter Schutz zwei flache Flächen aus einem schrumpfenden Material mit einer Porengröße von mehr als 10 µm umfasst, wobei die besagten flachen Flächen zwei laterale Seiten, nämlich eine untere und eine obere Seite besitzen, wobei besagte flache Flächen längs der besagten lateralen Seiten gemäß einer ersten Art Montage zusammengeführt werden, wobei besagter Schutz zwischen den besagten oberen Seiten offen und zwischen den besagten unteren Seiten weiter offen ist, oder längs der besagten unteren Seiten durch eine Verbindung verschlossen ist, die besagte flachen Flächen gemäß einer anderen Art der Montage mit einer unterschiedlichen Verbindungsstärke verbindet, und wobei der Schutz elastische Eigenschaften aufweist;
- Positionieren einer Elektrodenplatte in den besagten Schutz;
- Schrumpfen des Schutzes.

## Revendications

1. Protection contre la perte d'une masse active d'une électrode plate positive d'une batterie plomb-acide, la masse active se contractant et se dilatant pendant la charge et la décharge de la batterie plomb-acide, ladite protection comprenant deux faces plates faites d'une matière rétractable et ayant une taille de pore supérieure à 10 µm, lesdites faces plates ayant deux côtés latéraux, un côté inférieur et un côté supérieur, lesdites faces plates étant jointes ensemble le long desdits côtés latéraux selon une première sorte d'assemblage, ladite protection étant ouverte entre lesdits côtés supérieurs, ladite protection étant en outre ouverte entre lesdits côtés inférieurs ou étant fermée le long desdits côtés inférieurs par une jonction assemblant lesdites faces plates selon une autre sorte d'assemblage fournissant une force de jonction différente, la protection rétractée ayant des propriétés d'élasticité afin de se dilater et de se contracter avec le changement de volume de la masse active pendant la charge et la décharge de la batterie tout en exerçant une compression sur la masse active.

2. Protection selon la revendication 1, dans laquelle lesdits côtés latéraux sont joints par tissage ou couture.

3. Protection selon la revendication 1 ou 2, dans laquelle lesdits côtés latéraux sont joints par couture selon une première sorte de points.

4. Protection selon l'une quelconque des revendications 1 à 3, ladite protection étant ouverte ou fermée le long desdits côtés inférieurs par scellement.

5. Protection selon la revendication 3, ladite protection étant ouverte ou fermée le long desdits côtés inférieurs par couture selon une autre sorte de points.

6. Protection selon la revendication 5, dans laquelle ladite première sorte de points est constituée par des points noués doubles et ladite autre sorte de points est constituée par des points à surjeter.

7. Protection selon l'une quelconque des revendications 1 à 6, dans laquelle lesdites faces plates sont configurées pour avoir une première capacité à se contracter le long desdits côtés latéraux et une autre capacité à se contracter dans une direction perpendiculaire auxdits côtés latéraux.

8. Protection selon l'une quelconque des revendications 1 à 7, ladite protection étant renforcée le long desdits côtés latéraux.

9. Protection selon l'une quelconque des revendications 1 à 8, comprenant deux feuilles non tissées de ladite matière rétractable, lesdites deux feuilles étant assemblées ensemble pour définir en correspondance lesdites faces plates en étant jointes ensemble le long desdits côtés latéraux par une couture.

10. Protection selon la revendication 9, dans laquelle lesdites feuilles sont assemblées ensemble par soudage ultrasonique le long desdits côtés inférieurs.

11. Protection selon l'une quelconque des revendications 9 ou 10, comprenant une résine isolante le long desdits côtés latéraux.

12. Protection selon l'une quelconque des revendications 9 à 11, dans laquelle ladite matière rétractable est faite de polyester, de polypropylène ou d'un mélange de ceux-ci.

13. Protection selon l'une quelconque des revendications 1 à 8, comprenant une feuille tissée de ladite matière rétractable, ladite feuille tissée formant un manchon définissant lesdites faces plates en étant jointes ensemble le long desdits côtés latéraux par tissage.

14. Protection selon la revendication 13, dans laquelle ledit manchon est assemblé par soudage ultrasonique le long desdits côtés inférieurs.

15. Protection selon l'une quelconque des revendications 13 ou 14, dans lequel ledit manchon a une densité de tissage plus élevée le long desdits côtés latéraux.

16. Protection selon l'une quelconque des revendications 13 à 15, dans laquelle ladite matière rétractable est faite de fil de polyester, de fil de polypropylène ou d'un fil de mélange de polyester / polypropylène.

17. Protection selon la revendication 16, dans laquelle le fil pour la trame est un fil thermorétractable.

18. Protection selon la revendication 17, dans laquelle le fil pour la trame est perpendiculaire auxdits côtés latéraux.

19. Électrode plate positive comprenant une protection selon l'une quelconque des revendications précédentes.

20. Électrode plate positive selon la revendication 19, dans laquelle ladite protection est partiellement fermée le long desdits côtés supérieurs.

21. Batterie plomb-acide du type à électrode plate comprenant des électrodes plates positives selon la revendication 19 ou 20.

22. Procédé pour fabriquer une électrode plate positive à utiliser dans une batterie plomb-acide, comprenant les étapes de
- fourniture d'une protection pour ladite électrode plate positive, ladite protection comprenant deux faces plates faites d'une matière rétractable ayant une taille de pore supérieure à 10 µm, lesdites faces plates ayant deux côtés latéraux, un côté inférieur et un côté supérieur, lesdites faces plates étant jointes ensemble le long desdits côtés latéraux selon une première sorte d'assemblage, ladite protection étant ouverte entre lesdits côtés supérieurs, ladite protection étant en outre ouverte entre lesdits côtés inférieurs ou étant fermée le long desdits côtés inférieurs par une jonction assemblant lesdites faces plates selon une autre sorte d'assemblage fournissant une force de jonction différente, ladite protection ayant des propriétés d'élasticité ;
- placement d'une plaque d'électrode dans ladite protection,
- contraction de la protection.
